(19) Europäisches Patentamt
European Patent Office
Office européen des brevets

(11) **EP 3 716 602 A1**

(12) **EUROPEAN PATENT APPLICATION**

(43) Date of publication:
**30.09.2020 Bulletin 2020/40**

(51) Int Cl.:
*H04N 1/60* (2006.01)    *H04N 9/64* (2006.01)
*G06T 5/00* (2006.01)    *H04N 5/00* (2011.01)

(21) Application number: **19305405.3**

(22) Date of filing: **28.03.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: InterDigital VC Holdings, Inc.
**Wilmington, DE 19809 (US)**

(72) Inventors:
• **REINHARD, Erik**
  **35576 Cesson-Sévigné (FR)**
• **MAZZANTE, Angelo**
  **35576 Cesson-Sévigné (FR)**
• **STAUDER, Jürgen**
  **35576 Cesson-Sévigné (FR)**

(74) Representative: **Huchet, Anne**
  **InterDigital CE Patent Holdings**
  **20, rue Rouget de Lisle**
  **92130 Issy-les-Moulineaux (FR)**

(54) **METHODS FOR PROCESSING AUDIO AND/OR VIDEO CONTENTS AND CORRESPONDING DEVICE, SYSTEM, COMPUTER READABLE PROGRAM PRODUCT AND COMPUTER READABLE STORAGE MEDIUM**

(57)    The disclosure relates to a method comprising:
- obtaining input elements;
- mapping the input elements to output elements according to a Look-Up Table (LUT) based on a mathematical transform;
- modifying the mathematical transform and/or the Look Up Table before the mapping.

   The disclosure relates for example to a method comprising:
obtaining input colors of a visual content;
- mapping the input colors to output colors according to a Look-Up Table (LUT) based on a color transform;
- modifying the color transform and/or the Look Up Table before the mapping.

   It also relates to corresponding device, system, computer readable program product and storage medium.

Figure 3

**Description**

**1. Technical field**

The present disclosure relates to the technical field of processing of sets of elements, for example elements related to at least one audio and/or video content.
Methods for processing an audio and/or video content and corresponding device, system, computer readable program product and computer readable storage medium are described.

**2. Background art**

In the field of image and/or video processing, the application of a mathematical transform, like a color transform, is needed in various applications.

Such a mathematical transform can be represented by and therefore sampled into a Look Up Table (LUT). The application of the transform can then be replaced for simplicity and/or efficiency purpose for instance, by a use of the LUT by a module called a LUT applicator. As the size of a LUT is limited, the LUT applicators need to interpolate mapping of colors from LUT colors. For example, linear interpolation can be used in case of a one-dimensional LUT, for one color coordinate, or linear, tetrahedral interpolation can be used for a three-dimensional LUT for three color coordinates.

The applying of LUTs, and their corresponding interpolations to colors of a content can lead to final colors that can be different from the original colors. Thus, some artifacts can be noticeable at a user's perspective. This can for example be the case when several LUTs are applied successively.

For example, when editing an image and/or a video content, a first artist can use a first color mapping, by using a first Look-Up Table (LUT), via a LUT applicator, for modifying colors of the content, and obtaining a content with modified, intermediate, colors. In some situation, it can furthermore happen that, at a later stage, another color artist might in turn want to bring another modification to the intermediate colors resulting from the applying of the first LUT. This might happen for instance when the original content is not available. In order to bring back a content in a state being as close as possible to the original content in terms of colors, the other color artist may first use a second LUT applicator on the intermediate colors of the content, for reestablishing as most as possible the unedited colors.

Other examples can be found in the field of video distribution system. In audio-visual distribution, various formats are defined that for example differ in terms of quality of signal representation. The quality of a signal representation is often assessed by the dynamic range (DR) (or dynamic ranges for more than one-dimension) associated to the signal representation, or in other words by the ratio between the largest and the smallest possible values for a signal using the signal representation. Indeed, a larger range of values permits to represent more fluctuations of a signal and thus increase the quality of the signal. In the exemplary field of video processing, depending on the dynamic range associated to a signal representation, the signal representation can permit greater or lower luminance variations, or narrower or larger range of colors, thus providing more or less range, precision and/or contained details for the resulting signals.

However, the format, or signal representation, accepted by an electronic device, for example an electronic device processing audio and/or video contents, is very dependent of its storage and/or capabilities. In the technical field of production and/or distribution of audio and/or video contents, many electronic devices can be involved in the processing of an audio and/or video signal, or content, in view of its consumption by a user. Thus, the format of a content can be modified successively several times, for being adapted to successive processing devices, before being consumed by a user.

For instance, a first color transform (or the corresponding LUT), that reduces color gamut or dynamic range of a High Dynamic Range (HDR) content can be applied at a transmitter side, thus resulting in a content with intermediate colors in a Standard Dynamic Range (SDR). At the receiver side, a second LUT applicator can then be used on the SDR content, to re-establish the original colors of the HDR content.

So there is need for a solution that provides some enhancement, compared to the above disadvantage, for example by enhancing a user experience.

**3. Summary**

The present principles enable at least one of the above disadvantages to be resolved by proposing a method comprising:

- Obtaining input elements;
- Mapping said input elements to output elements according to a Look-Up Table (LUT) based on a mathematical transform;
- modifying said mathematical transform and/or said Look Up Table before said mapping.

The method can for example be implemented in an electronic device.

According to another aspect, the present disclosure also concerns an electronic device comprising at least one processor, the at least one processor being adapted for:

- Obtaining input elements;
- Mapping said input elements to output elements according to a Look-Up Table (LUT) based on a mathematical transform;
- modifying said mathematical transform and/or said Look Up Table before said mapping.

**4. List of drawings.**

The present disclosure can be better understood, and other specific features and advantages can emerge upon reading the following description, the description referring to the annexed drawings wherein:

- Figure 1 shows an example of a distribution system according to an exemplary embodiment of the present disclosure;
- Figure 2 illustrates an exemplary functional structure of an electronic device adapted to implement at least some of the embodiments of the method of the present disclosure;
- Figure 3 gives an overview of some exemplary embodiments of the method of the present disclosure;
- Figures 4A, 4B 5A, 5B, 6, 7 and 8 illustrate different exemplary embodiments of the method of the present disclosure, some being combinable together;
- Figure 9 illustrates curves showing monitored gaps (or errors) depending on a linearization strength.

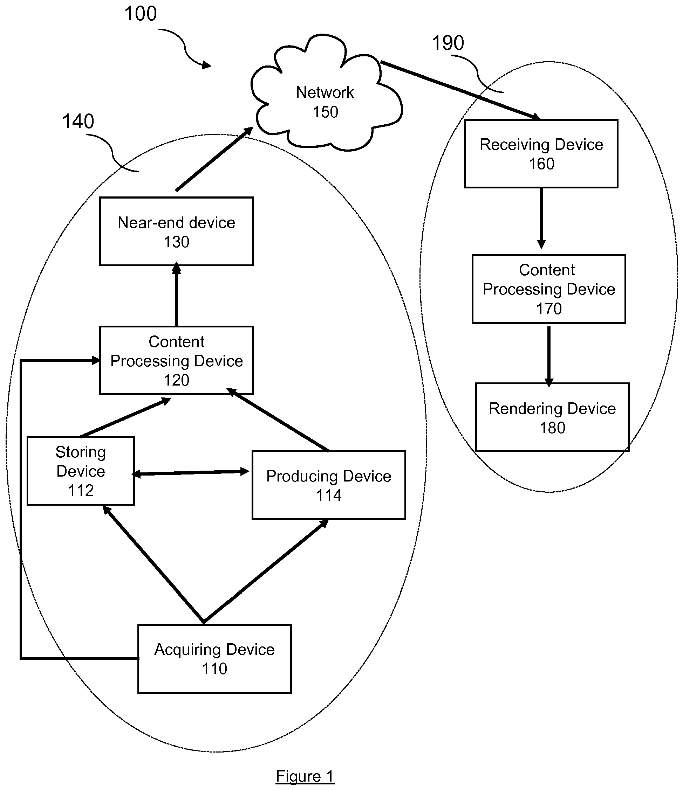

It is to be noted that the drawings illustrate exemplary embodiments and that the embodiments of the present disclosure are not limited to the illustrated embodiments. For example, as will be evident for the one skilled in the art, the different embodiments illustrated by figures 1 to 9, can also be implemented in at least one other system, for instance a system comprising more devices, either to a production or distribution side or at a consumption side.

**5. Detailed description of the embodiments.**

The present disclosure relates to the technical field of devices adapted to process contents, like audio and/or video contents, for example in view of their distribution and/or consumption. Term "process" is herein to be understood in its larger scope and encompass one or more diverse operation like modifying, encoding, transmitting, receiving, decoding, rendering at least a part of a content, and/or the control of at least part of such operation. The rendering of a content can differ depending on the nature of the content and can comprise for instance displaying a visual part of the content or playing an audio part of the content. By "visual part" it is to be understand a video, one or more sequences of images, and/or one or more still images, and/or one or more colored 3D data sets, and/or one or more light fields, or a composition thereof.

As explained above, the processing of a content can involve a modification of the content. The formats of a content can be diverse, depending on the kind of represented data.

Furthermore, a format can be a format compatible with at least one standard format or can be a specific format (like a "proprietary" format), for instance a format providing some advantage in term of storage or processing cost.

Formats can correspond to representations involving a varying coding cost and thus varying requirements in terms of bandwidth for the transmission of a content. For instance, an audio content represented by using a first format can have a lower coding cost (and thus require a lower bandwidth) than the same audio content represented by using a second format.

Color formats can be based on luminance (like color format corresponding to a 1D range) and/or colorimetry (like color format corresponding to color gamut in 2D or 3D for instance) for instance. Examples of well-known video standards based on luminance and colorimetry having extended luminance range include the International Telecommunication Union - Radiocommunication Sector (ITU-R) BT.2100 standard (Broadcasting service (television) Series - "Image parameter values for high dynamic range television for use in production and international programme exchange", July 2018), that represents for example video signals with a luminance up to 10000 cd/m$^2$, often called High Dynamic Range (HDR), and the Standard Dynamic Range (SDR) HDTV (High Definition TeleVision) of the Society of Motion Picture and Television Engineers (SMPTE), that represents video signals at a luminance of 100 cd/m$^2$.

Some well-known video standards based on luminance and colorimetry having extended colorimetry include the colorimetry standard ITU-R BT.2020 (Broadcasting service (television) Series - "Parameter values for ultra-high definition television systems for production and international programme exchange" - October 2015) and the colorimetry standard ITU-R BT.709 (Broadcasting service (television) Series - "Parameter values for the HDTV standards for production and international programme exchange" - June 2015), where the ITU-R BT.2020 colorimetry standard specifies a video signal having more saturated and colorful colors than a video signal according to ITU-R BT.709 colorimetry.

Various solutions can be used for modifying a format of a content. For example, some solutions can be based on a mathematic transform, often a function (of certain complexity), altering a set of content elements having an impact on the representation of the content. For instance, for content elements being colors, a color transformation can be applied on the colors of a content. For increasing the speed of processing, instead of applying the function to each content element, a Look Up Table (LUT), mapping a first set of content elements to a second set of content elements, can be obtained from the function. This LUT can then be used, at a later stage, together with an interpolation function, for modifying any content element.

For instance, a Look Up Table (LUT), mapping a first set of colors in a first color space into a second set of colors in a second color space, can be obtained from a color transform and then used, together with an interpolation function, for modifying the colors of a visual content. However, although the use of LUT can help increasing the processing speed, when modifying a content element, some differences between content elements (like color difference) compared to the format resulting by the applying of the function itself can be introduced by the interpolation for at least some part of the content.

A linear function can be very well (even almost perfectly) approximated by a LUT and a linear interpolation function. However, when the function approximated by the LUT is more complex than a linear function, for example when the approximated function involves non-linear parts, and/or when the size of the LUT is limited (so that it does not occupy too much memory space), the application of the LUT can output values (like color values) that deviate from the output of the function.

For instance, for the same input content elements, some deviation can be expected between some color coordinates resulting from the use of a LUT obtained directly from the original transform and some color coordinates resulting from the applying of the original transform. This can furthermore lead to less reversible format operations on a content. For example, when two LUTs are used, a first one instead of a first function and a second one instead of the inverse function of this first function, the output of the first LUT being used as the input of the second LUT, the final format content can differ from the original input content. For example, the deviation introduced by both LUT may cumulate. At least one embodiment in accordance with the present disclosure can reduce difference(s) (like color differences) between original content elements of an original content, intermediate content elements of an intermediate content and/or final content elements of a final content, the original content having an original format, the intermediate content having an intermediate format, the final content having a final format, the final content elements been obtained from the original content elements, via the intermediate content elements, the final and intermediate content elements being each obtained by using LUTs, computed from a mathematic transform and/or its inverse mathematical transform, and interpolation.

At least some embodiments of the disclosure propose to use at least one "adapted", (or "enhanced" or "modified") LUT. Indeed, according to some embodiments, the at least one LUT, while being still based on the mathematical transform, or its inverse, is not obtained directly by applying the mathematical transform, or its inverse, on some sampled content elements. For instance, according to some embodiments of the disclosure, the mathematic transform (or its inverse) is modified before being applied on some sampled elements for obtaining a LUT. For example, the mathematic transform, or its inverse, can be, at least partly, linearized. According to some embodiments of the disclosure, a LUT, obtained by applying the mathematical transform to some content elements (obtained by sampling), is modified before being used for mapping the content elements of the content to another format.

At least some embodiments of the method of the present disclosure can thus help obtaining a LUT, or a mathematic transform, being more linear than the LUT corresponding to the original mathematical transform.

More precisely, at the time of a first content modifying (for instance at a transmitter side), like a modifying of a format of a content, at least some of the embodiments of the method of the present disclosure can comprise an adapting stage, comprising for example a linearizing stage, which is performed either on the transform, before the sampling, or on a first intermediate LUT representing the transform.

At the time of a second content modifying (for instance a format modifying aiming to recover the original format at a receiver side), at least some of the embodiments of the method of the present disclosure can comprise obtaining the transform being the inverse of the transform used by the first content modifying and obtaining a second "enhanced" LUT by performing an adapting stage, either on the obtained inverse transform, before its sampling, or on a second intermediate LUT representing the inverse transform.

In at least some embodiments, the first and/or second content modifying can help to provide final elements closer to the original elements than final elements that would have been obtained by applying LUTs resulting respectively from the sampled transform and the sampled inverse transform.

Figure 1 illustrates a system 100 comprising one or more devices adapted to implement at least one embodiment of the present disclosure. In the illustrated embodiment, the system 100 is a distribution system that comprises communication devices 110, 112, 114, 120, 130, 160, 170, 180 that can exchange data inside one or more communication networks. For instance, some communication devices 110, 112, 114, 120, 130 can exchange data via a local area network (LAN) 140 associated to a content provider processing environment. Some communication devices 160, 170, 180 can exchange data via a LAN 190 associated with a content consumption processing environment, Exchanges inside a LAN can be performed thanks to wired communication interfaces (like Ethernet interface or interface based on Power Line communication (PLC) technology) and/or wireless communication interfaces, like WIFI® interfaces. At least some communication devices 130, 160 of the LAN 140 190 can exchange data via a Wide Area Network 150 (like a Broadcast Network or a broadband Network). At least some of the communication devices of the system 100 can require some specific input formats regarding its input content and/or can output a content having a specific output format. For instance, in the field of image or video processing, some of the devices can require input content in a SDR range and/or can produce content in a HDR range. Thus, the system 100 can comprise one or more content processing device. The content provider processing environment 140 of figure 1 can comprise one or several audio and/or video acquiring device(s) 110 (like cameras and/or microphones), and/or one or several content production device(s) 114 for generating audio and/or video content (for example content representing virtual reality scenes or augmented reality scenes), and/or one or several storing device(s) 112, and/or one or several content processing device(s) 120 (like format processing device(s)), and/or one or several transmitting device(s) 130. The content consumption processing environment 190 can comprise one or several receiving devices 160, one or more content processing device(s) 170 (like format processing device(s)) and one or more rendering devices (like display or speakers) 180. Some of the devices of the processing environment 140, 190 can be optional in some embodiments. Several of those devices can be part of a same physical apparatus or can belong to different, separate, physical apparatus, depending upon embodiments. In the exemplary embodiment of figure 1, at least one of the content processing devices 120,170 is a color processing device.

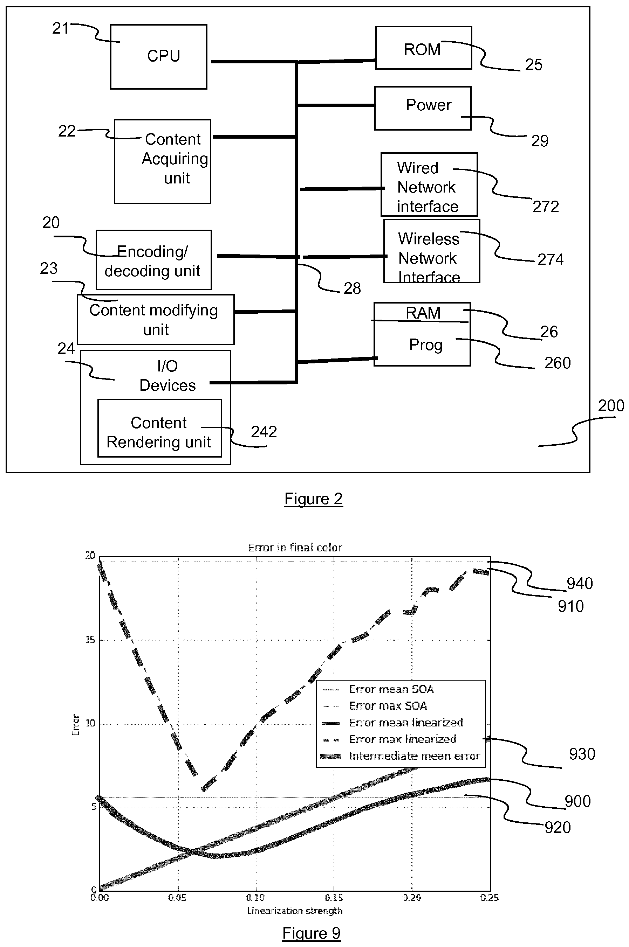

Figure 2 describes an exemplary functional structure of a content processing device 200 comprising for example format modification capabilities. The processing device of figure 2 can be implemented in the content provider processing environment 140 of figure 1, for instance in the content modifying device 120. The processing device of figure 2 can also be implemented in the content consumption processing environment 190 of figure 1 (for instance in the content modifying device 170 of figure 1), The content processing device 200 is for example adapted to implement the method 300 of the present disclosure, that is described later, in at least some of its embodiments. It is to be pointed out that the elements, or module, or blocks, of the functional structure illustrated of figure 2 can be implemented using software components of the content processing device 200 and/or hardware components of the content processing device 200. At least some elements illustrated by figure 2 can comprise both at least one software component and at least one hardware component of the processing device 200.

In the exemplary embodiment of figure 2, the content processing device 200 can include different devices (or modules), linked together via a communication bus 28, such as a control, data and address bus, which can also carry a timing signal. For instance, device 200 can include one or several micro-processors 21 (or Central Processing Units (CPU)), a ROM (or « Read Only Memory») 25, a RAM (or « Random Access Memory») 26 and wired and/or wireless communication interface(s) 272, 274. For example, at least one of communication interfaces 272, 274 of the content processing device 200 can be adapted to receive one or more audio and/or video content or stream and/or provide access to the Network 150 of figure 1 for instance.

In the exemplary embodiment of figure 2, the content processing device 200 can also comprise at least one content modifying unit 23 adapted to modify an input content (for instance its color), for instance a content acquired by an acquiring unit 22 of the content processing device 200, and an encoding or decoding unit 20 adapted to encode or decode the content (e.g., instead of, or before or after its processing by the content modifying unit 23).

In the exemplary embodiment of figure 2, the content processing device 200 can further comprise at least one Input/ Output module 24, (like one or more of a tactile display, a switch, a LED, a button, and so on). For example, the content processing device can comprise an input Interface adapted to enable a user to request a specific kind of format modification and/or to enter some parameters adapted to tailor a format modification to be performed by the content modifying unit 23. In some embodiments, those parameters can for example be obtained at the time of the format modification. This interface is optional, indeed the tailoring of the processing (like the format modifying) performed by the content processing device can be automated. For example, the selection of the kind of format modification to be performed by the content processing device can be determined without any user input at the time of the format modification. In the illustrated embodiment, the content processing device can comprise a content rendering unit 242, adapted to render a content in one or more format. The rendering unit can include a display and/or a speaker. This content rendering unit is optional in some embodiments. Depending upon embodiments, those parameters can for example be obtained before or at the time of the modification.

Each of the mentioned memories can include at least one register, that is to say a memory zone of low capacity (a few binary data) or high capacity (with a capability of storage of a whole program or of all or part of data representative of data to be calculated or displayed).

When the content processing device 200 is powered on, via a power supply module 29, for instance a power supply module connected to the power line network, the at least one microprocessor 21 loads the program instructions 260 in a register of the RAM 26, for example the processes needed for performing at least one embodiment of the method 300 described hereinafter and executes the program instructions.

The content processing device 200 of the system can be adapted to implement the method 300 of the present disclosure, in any of its embodiments.

In the exemplary embodiment illustrated in figure 2, the microprocessor 21 can be configured for:

- Obtaining input elements;
- Mapping said input elements to output elements according to a Look-Up Table (LUT) based on a mathematical transform;
  modifying the mathematical transform and/or the Look Up Table before the mapping.

Figure 2 has only an exemplary purpose. It is to be pointed out that the content processing device 200 can further comprise additional capabilities illustrated as provided by separate devices (like devices 110, 112, 114, 130, 150, 160, 170 and/or 180) in Figure 1. Furthermore, at least some embodiments of the present disclosure can be at least partially implemented in at least one content processing device externally coupled to another device.

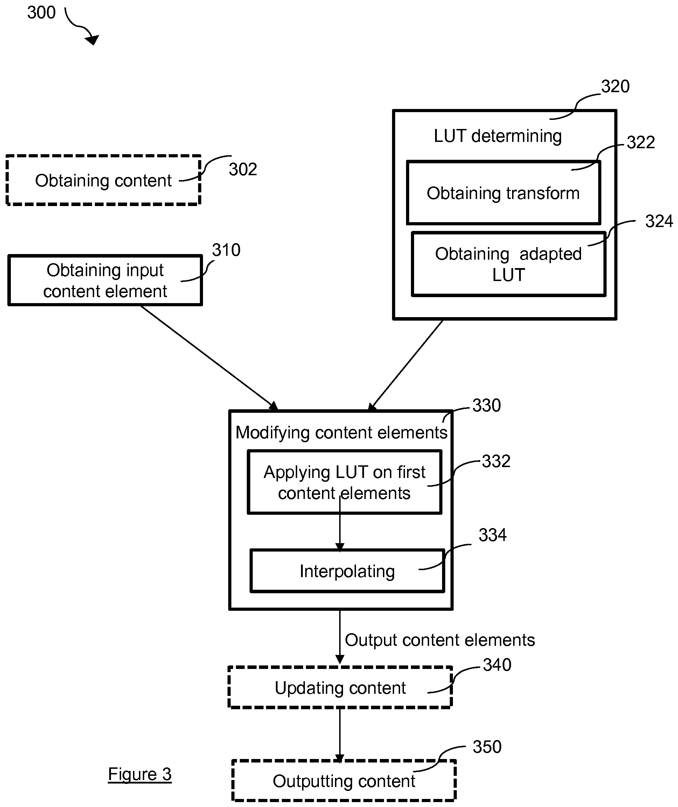

**Figure 3** shows an overview of an exemplary embodiment of the method 300 of the present disclosure, implemented for instance in the device 200 of figure 2. In the illustrated embodiment, the method comprises obtaining 310 input content elements, complying for instance with a first format providing elements in a first range of possible values. The first format can be for instance a color format (like colorimetry or luminance) or an audio format. In some embodiments, the method can further comprise, in order to obtain the input content elements, obtaining 302 the content to which the input content elements are related and processing the input content elements from the obtained content. Depending upon embodiments, the content can be stored in a memory of the electronic device where the method is implemented, or can be received from a communication interface of the device.

The method can further comprise determining 320 an "enhanced" LUT to be used on the input content elements. The determining can comprise obtaining 322 a transform on which the "enhanced" LUT is to be based, and obtaining 324 the enhanced, adapted, LUT from this obtained transform.

In the embodiment illustrated by figure 3, the method comprises modifying 330 the input content elements. The modifying comprises mapping 332 at least some of the input content elements having a first format according to the determined "enhanced" LUT to output content elements complying to a second format (or in simplified words applying 332 the determined "enhanced" LUT) and interpolating 334 output content elements, for input content elements not present in the LUT.

Optionally, the method 300 can comprise updating 340 the obtained content with the output content elements and/or outputting 350 the updated content. For instance, the updated content and, optionally, some associated side information (for example an information representative of the color transform on which the LUT is based) can be output to another device via a communication interface. For instance, if the device 200 is a device of the content provider environment 140 of figure 1, the updated content and, optionally, its associated side information can be output to a storage device for a later processing, or to a transmitting device for being transmitted to a device of the content consumer processing environment 190 illustrated by figure 1.

Even if not described herein the method can comprise, prior to the outputting 340 of the content, an encoding of the content.

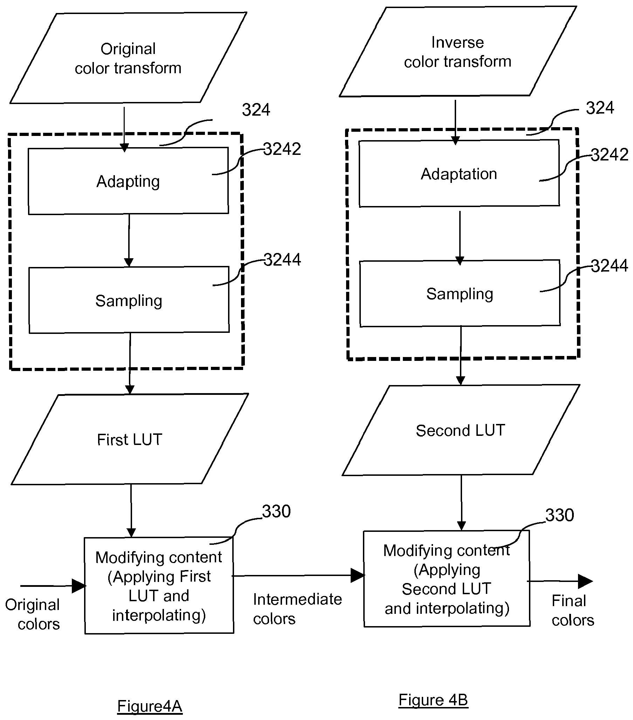

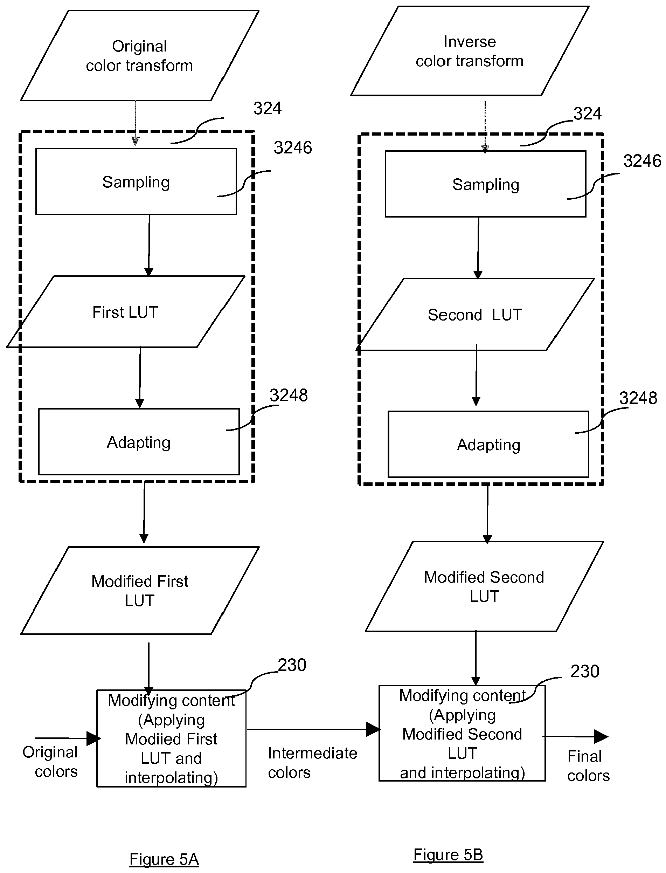

As explained herein before, the "enhanced" LUT which will be applied to the input content element is not simply a sampling of input and corresponding output values given by the obtained mathematical transform. For instance, in some embodiments, as represented by figures 4A and 4B, obtaining 324 an adapted, enhanced, LUT can comprise adapting 3242 the transform before its sampling 3244. For example, in at least one embodiment the adapting 3242 can comprise linearizing, at least partly, the mathematic transform, in order to obtain a more linear transform. In the present disclosure, "a more linear transform" is to be understood as a transform being linear for a larger part of input values or closer to a linear transform, at least for a part of input values than the transform to which it is compared. In other embodiments, as represented by figures 5A and 5B, obtaining 324 an adapted, enhanced, LUT can comprise sampling 3246 the transform and adapting 3248 the LUT resulting from the sampling. The adapting 3248 can, e.g., comprise linearizing the resulting LUT in order to obtain a LUT, or a mathematic transform, being more linear than the LUT corresponding to the original mathematical transform.

In some embodiments, the method 300 of figure 3 can be performed twice:

- a first time (as illustrated by figures 4A and 5A) for obtaining intermediate content elements (and/or corresponding content) output by the method when processing input content elements based on an input transform (also called herein "original" content elements and "original" transform respectively);
- a second time (as illustrated by figures 4B and 5B) for obtaining final content elements (and/or corresponding content) output by the method when processing the intermediate content elements (obtained the first time) based on an inverse of the same original transform.

For example, some embodiments of the present disclosure can help reducing a gap (or in other words an error, or a difference) between original content elements and final content elements without modifying the original transform.

Furthermore, some embodiments of the present disclosure can use Look Up Tables being smaller than Look up tables used by some prior art solutions, for a same level of error in final colors.

It is to be pointed out that, even if the method is performed twice, it can be implemented differently (by different embodiments) the first and the second times.

Depending upon embodiments, the method can be performed twice (and differently) in a same or a different device. For instance, the method can be performed a first time in at least one device of the exemplary content processing environment 140 of figure 1, based on an original transform, and a second time in at least one device of the exemplary content consuming environment 190 of figure 1, based on another transform related to the original transform, for instance an inverse of the original transform. In such a case, items of information allowing the identification of the original transform applied the first time can be output and transmitted, in association with the intermediate content (for instance as side information).

It is to be pointed out that, in some other use cases, at the opposite, it can happen that a first content modifying operating based on an original transform can be followed by a second content modifying operation using an inverse of the original transform already used, the method of the present disclosure being implemented only for the first content modifying or only for the second content modifying, the other content modifying operation being performed for instance by using the LUT obtained directly by sampling the original transform or the inverse of the original transform or by using directly the original transform or the inverse of the original transform.

Different examples of embodiments of the method of the present disclosure are described more precisely herein after, such as, for example, based on color transforms based on trichromatic coordinates. Of course, other embodiments of the present disclosure can relate to other content modifications. Indeed, other embodiments can be implemented similarly to the describes embodiments to technical fields other than color processing or on other content elements.

Also, it is to be pointed out that even if some embodiments of the present disclosure are more explicitly described in regards to an adapting of the transform (as for instance in figures 4A and 4B), other embodiments of the present disclosure can similarly apply in regards an adapting of a LUT obtained from the transform (as illustrated for instance by figures 5A and 5B).

In at least one of the examples of detailed embodiments described hereinafter, the method 300 is performed twice as explained above during an overall process (or workflow). For instance, the method can be performed firstly for obtaining an SDR content from an original HDR content in the content providing environment of figure 1 and secondly for obtaining a final HDR content from the SDR content in the content providing or consuming environments of figure 1, the final HDR content being intended to be as close as possible to the original HDR content.

In the following, R, G, B designates respectively original Red, Green, Blue trichromatic coordinates, R', B' and G' designates respectively the corresponding Red, Green, Blue trichromatic coordinates output by the original transform (first stage) from R, G, B and R", G", B" designates respectively the corresponding Red, Green, Blue trichromatic coordinates generated by the inverse of the original transform (second stage) from R',G',B'.

The original transform can be, for example, a tone mapper of trichromatic coordinates defined for R' (and similarly for G' and B') by :

$$R' = \mathrm{TM}(R) = \frac{255}{f_{TM}(255) - f_{TM}(0)} \left( f_{TM}(R) - f_{TM}(0) \right),$$

with the function

$$f_{TM}(x) = 255\, S\left( \frac{x-128}{k} \right),$$

and the sigmoid function according to

$$S(x) = \frac{1}{1 + e^{-x}},$$

where k is a numeral constant, for instance a constant k being an integer value in the range [10; 50], like k=20; k= 30 or k= 40.

The inverse of the original color transform detailed above can be an inverse tone mapper simply derived by inverting the tone mapper and defined for R" (and similarly for G" and B") by :

$$R'' = \mathrm{ITM}(R') = f_{ITM}\left(\frac{f_{TM}(255)-f_{TM}(0)}{255}x + f_{TM}(0)\right),$$

with the function

$$f_{ITM}(X) = \mathrm{k}\, S^{-1}\left(\frac{X}{255}\right) + 128,$$

where $S^{-1}()$ is the inverse sigmoid function according to

$$S^{-1}(x) = -\ln\left(\frac{1}{x} - 1\right),$$

In the exemplary embodiment of figure 4A, adapting 3242 the original color transform can comprise linearizing, at least partly, the original color transform. For instance, a linear function according to: $y = f(x) = x$ can be used as a linearizing function. Incorporating this linear function into the original color transform can lead to the following linearized original color transform (with R' being the output of the linearized original color transform)

$$R' = LTM(R) = c_1 TM(R) + (1 - c_1)f(R)$$

with c1 being a first linearization coefficient having, for example, a real numeric value between 0 and 1 (for instance 0, 85 or 0.9 or 0.95).

Similarly, when the color transform on which the method is based is the inverse of an original color transform (as illustrated by figure 4B), the adapting 3242 can comprise linearizing the inverse of the original color transform. For instance, the linear function f() introduced above can be used and incorporated into the inverse of the original color transform leading to the following linearized inverse color transform (with R" being the output of the inverse of the linearized original color transform)

$$R'' = LITM(R') = c_2 ITM(R') + (1 - c_2)f(R')$$

with c2 being a second linearization coefficient being a real number between 0 and 1 (for instance 0, 85 or 0.9 or 0.95).

According to the embodiments of figures 4A and 4B, the method comprises sampling 3244 the linearized color transform (more precisely sampling the adapted, linearized, original color transform according to figure 4A and sampling 3244 the adapted, linearized, inverse of the original color transform according to figure 4B)

The method can further comprise applying the adapted LUT to the input colors (the original colors of figure 4A and the intermediate colors of figure 4B) .

Of course, the detailed embodiment described above has only an exemplary purpose and, depending upon embodiments of the present disclosure, different ways of adapting, and for example linearizing a color transform can be used. For example, a linearized tone mapper LTM(R) can be found by optimization, as expressed below:

$$\underset{LTM}{\mathrm{argmin}}\|TM(R) - LTM(R)\|_2^2,$$

with the constraint

$$\frac{d^2}{dR^2}\, LTM(R) \le \nabla_{\max},$$

where $\nabla_{max}$ is a first value (like a predefined value) that can be used as a threshold for the curvature of LTM(R).

By this optimization, the resulting color transform LTM(R) has a lower maximum curvature than the original color transform TM(R) and can thus be considered as at least partially linearized with respect to TM(R).

Another exemplary embodiment of the method 300 of **Error! Reference source not found.**, that allows use of a three-dimensional original color transform, is described hereinafter. For instance, the original color transform can be a tone mapper according to:

$$R' = \mathrm{TM}_R(R, G, B) = (1 - C_{RG} - C_{RB})TM(R) + C_{RG}TM(G) + C_{RB}TM(B),$$

with $C_{RG}, C_{RB}$ being cross color channel coefficients that make the coordinate R' of the intermediate color dependent on the coordinates G, B of the green and blue channels, respectively, of the original color. The G' and B' coordinates can be calculated in a similar manner according to

$$G' = \mathrm{TM}_G(R, G, B) = (1 - C_{GR} - C_{GB})TM(G) + C_{GR}TM(R) + C_{GB}TM(B)$$

$$B' = \mathrm{TM}_B(R, G, B) = (1 - C_{BR} - C_{BG})TM(B) + C_{BR}TM(R) + C_{BG}TM(G)$$

with $C_{GR}, C_{GB}, C_{BR}, C_{BG}$ being cross color channel coefficients that make the coordinates G' and B' dependent on the other color channels.

The adapting of the "first stage" can comprise a linearizing of the three-dimensional original color transform using for instance the linear function f(x) introduced above. Incorporating the linear function f(x) into the three-dimensional original color transform can lead to the following linearized original color transform defined (for R) by :

$$R' = LTM_R(R, G, B)$$
$$= c_1 TM_R(R, G, B) + (1 - c_1)f(R)\frac{TM_R(255, G, B) - TM_R(0, G, B)}{f(255)} + TM_R(0, G, B)$$

with c1 being a first linearization coefficient being a numeric value between 0 and 1, for example c1 can take following values: 8,85; 0.90 or 0;95.In a similar way, the green and blue channels of a three-dimensional original color transform can be linearized.

The adapting of the "second stage" can comprise a linearizing of the three-dimensional inverse of the color transform, similarly to what has already been described above.

Of course, in still other embodiments, some other three-dimensional original color transforms can be used, including color gamut mapping, inverse tone mapping or artistic color transforms for instance.

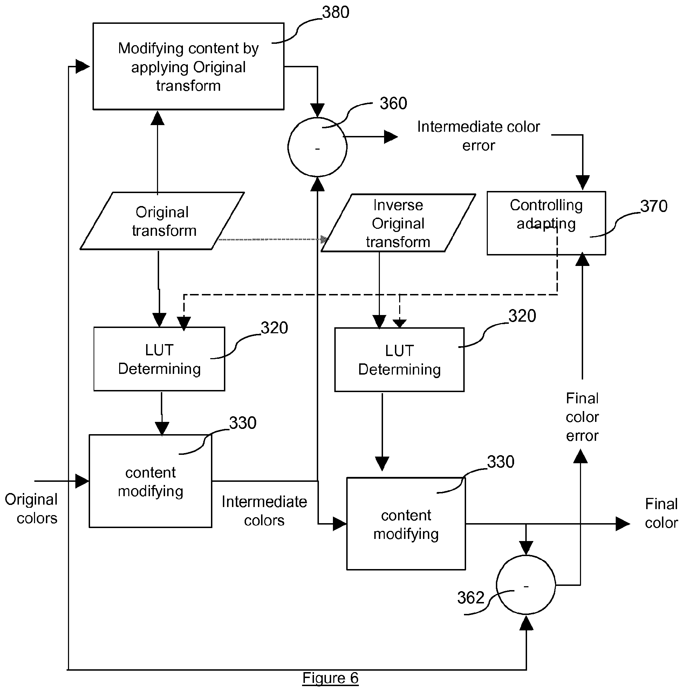

In some embodiments of the method 300 of the present disclosure, the adapting can be varied. Figures 6,7 and 8 present several embodiments with a varied adapting. In those exemplary embodiments, the method is implemented twice in an overall workflow, for example as two inverse stages of the overall workflow, similarly to what have been already been explained with regard to figures 4A and 4B or figures 5A and 5B. At the second stage, the method is based on a color transform being the inverse of an original color transform that has been used by the method for the first stage. The overall workflow can itself be implemented iteratively on a same visual content (for instance a same still image), in order to refine the processing, or in order to go back and forth in format, or successively on several images (for example several images on a same visual content).

In at least one example of an embodiment, the method can comprise monitoring 362, 364 one or more gaps related to the output of the method and controlling 370 the adapting performed during the LUT determining 320 accordingly, for instance by varying some parameters of the adapting.

The monitoring of one or more gaps can be performed, during the first and/or the second stage, or in association with both the first and second stage, and can comprise computing some control parameters, to be taken into account during the adapting, from those gaps. Depending upon embodiments, diverse gaps can be monitored.

In the exemplary embodiment of figure 6, the method can comprise modifying 380 at least some original colors of the original content by applying an original color transform, without use of a LUT, to the original colors, such as shown in figure 6, or alternatively by applying a LUT obtained directly from the original color transform (not shown in figure 6) thus resulting in what is called herein after "subsidiary" colors. Then, the method can comprise monitoring 360 a gap (called herein after "intermediate gap" or, as in figure 6 "intermediate color error") between those subsidiary colors and the intermediate colors output by the content modifying 330 . The intermediate gap can vary according to the strength of the adapting performed by the method during the LUT determining 320. For example, at least in some embodiments where the adapting 324 is a linearization, the intermediate gap can increase when this linearization increases. Additionally, the intermediate gap is increased with increasing interpolation errors that occur during the interpolating 334..

In the exemplary embodiment of figure 6, the method can comprise monitoring 362 a gap (called herein after "final gap" or "final color error") representative of the difference between the final colors output by the overall workflow (or the content modifying 330 of the method when performed at the second stage of the workflow) and the original colors. For example , using trichromatic representation, this final color error can be calculated according to

$$e(R) = T_{2nd\ LUT}\big(T_{1st\ LUT}(R)\big) - R,$$

where R is the color coordinate of the red channel of the original color.

A final error (or gap) can be calculated similarly for green and blue channels.

Monitoring 362 the final error can also combine the three errors obtained for the three R,G and B channels , for example by adding, by weighted adding, by calculating a mathematical norm or by any other way to calculate a distance or a difference. In at least some embodiments of the present disclosure, the adapting of the original and inverse color transforms, respectively, or the adapting of the LUT obtained from the original and inverse color transforms, respectively, performed by the method of the present disclosure, can help reducing the final color error.

As illustrated by figure 6, at least some embodiments of the method can comprise controlling 370 the adapting, in view of at least one of the monitored gaps. For instance, in some embodiments where the adapting, performed by the method at the first stage and at the second stage respectively, use linearizing and adaptation parameters c1, c2 described above with regard to figures 4A, 4B, 5A and 5B, controlling 370 the adapting can comprise varying the linearization parameter c1 and/or the adaptation parameter c2.

For instance, in an exemplary embodiment with c1=c2, Figure 9 shows variation of mean absolute values 900 and maximum absolute values 910 of the final color error according to the linearization strength 1-c1. Figure 9 also shows the variation of mean absolute intermediate error 930. At the very left of Figure 9, c1=c2=1 and the linearization strength, that can be expressed by "1-c1", is zero. Thus, no adapting is performed at any stage of the workflow, thus the obtained final mean 900 and maximum 910 color errors corresponds to the ones (thin lines 920 and 940, respectively) that can be obtained when well-known methods (or Solutions oOf Art (SOA)) are applied. In the exemplary embodiment of Figure 9, when the linearization strength 1-c1 is increased, the mean 900 and maximum 910 values of the final error decrease significantly with respect to the ones (thin lines illustrating mean error of SOA 920 and mean error of SOA 940, respectively) that could be obtained if no adapting was performed. For example, a minimum of the final errors is reached according to Figure 9, for a linearization strength around values of 0.07 or 0.08. Then, the final errors increase again. At linearization strength 0.2, the mean value 900 of the final error has the same value as the mean error 920 that could be obtained if no adapting was performed. Indeed, the increase of the final error according to some embodiments of the present disclosure, can be due for instance to the fact that the adapted inverse color transform is not the perfect inverse of the linearized original color transform (as discussed above).

In some embodiments, the monitoring and the controlling can be performed continuously and/or iteratively in time. In some other embodiments, they can be performed more often during a training phase, used for defining adapting parameters that will be kept constant, or almost constant, at a later stage.

In some embodiments, the linearization strength can be chosen to correspond to the smallest mean final color error, i.e. approximately in the exemplary embodiment of Figure 9 when 1-c1=0.08. Indeed, large linearization strength can be avoided in some embodiments for helping to keep the intermediate color error small. In some embodiments, small linearization strength can be avoided in order to help having a significant reduction in the final color error.

In some other embodiments, the linearization strength can be chosen to correspond to the smallest maximum final color error, i.e. approximately at 1-c1 =0.065 in the exemplary embodiment of Figure 9. In still some other embodiments, the linearization strength can be chosen as the smallest linearization strength where the mean intermediate color error and the mean final color error are the same, i.e. approximately at 1-c1=0.06 in the exemplary embodiment of figure 9.

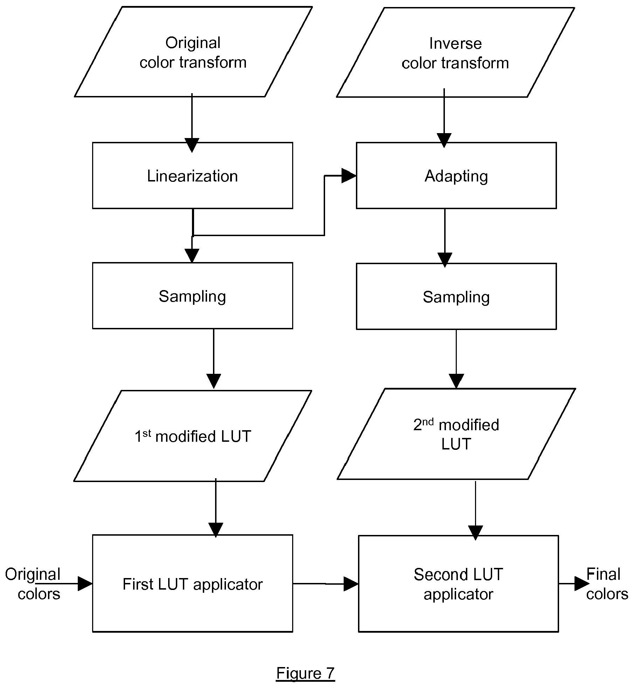

Still other embodiments of the present disclosure are illustrated by Figure 7. Indeed, according to Figure 7, the adapting of the method, when performed at the second stage of the workflow, also takes into account the output of the adapting of the method, when performed at the first stage of the workflow. Such embodiments can help obtaining, as an output of the adapting of the second stage, an adapted inverse color transform being closer to the inverse of the linearized original color transform.

The adapting of the first and/or second stage can be implemented in several ways. For instance, according to the exemplary embodiment illustrated by Figure 7, the "first stage" adapting is a linearizing of the original transform and the "second stage" adapting can comprise:

- Inverting the "first stage" linearized original color transform, resulting in a second inverse color transform;

- Creating a transform being a weighted sum of the inverse of the original color transform and the second inverse color transform;

- Creating a second ("adapted") LUT (being the output by the LUT determining 320 of the method) by sampling this weight sum of transforms .

According to yet another embodiment, the "second stage" can comprise a linearizing of the inverse original transform , while adapting in the "first stage" can comprise:

- Inverting the linearized inverse of the original color transform output by the adapting of the "second stage" resulting in a second color transform;

- Linearizing the second color transform;

- Creating a "first" "modified" LUT (in the LUT determining of the first stage) by sampling the linearized second color transform.

According to some other embodiments, the "second stage" adapting can comprise:

- Inverting the "first stage" linearized original color transform resulting in a second inverse color transform;

- Linearizing the second inverse color transform;

- Creating a second modified LUT (in the LUT determining of the second stage) by sampling the linearized second inverse color transform .

According to still some other embodiment, the "second stage" adapting can comprise: :

- Inverting the " first stage" linearized original color transform;
- Using the inverse linearized original transform as the adapted inverse transform.

This latest "second stage" adapting is described more precisely herein after with regard to an exemplary embodiment where the original color transform (OCT) is defined by:
$R' = \text{OCT}(R) = R^2$, with R being the color coordinate for red, and where OCT similarly generates G' and B' from the color coordinate G and B for Green and Blue.
In this example, the adapting performed at the first stage can be for instance a linearization of the original color transform OCT, resulting in a linearized original color transform (LOCT), less steep than the original color transform OCT. For instance, LOCT can be defined for Red R by:

$$R' = \text{LOCT}(R) = R^{2-0.1} = R^{1.9},$$

With this notation, the inverse (ICT) of the original color transform OCT is defined by:

$$R'' = \text{ICT}(R') = OCT^{-1}(R') = \sqrt{R'}.$$

The "second stage" adapting according to the exemplary embodiment modifies the inverse color transform ICT resulting to

$$R'' = \text{AICT}(R') = LOCT^{-1}(R') = \sqrt[1.9]{R'},$$

(thus, taking into account the linearized original color transform)

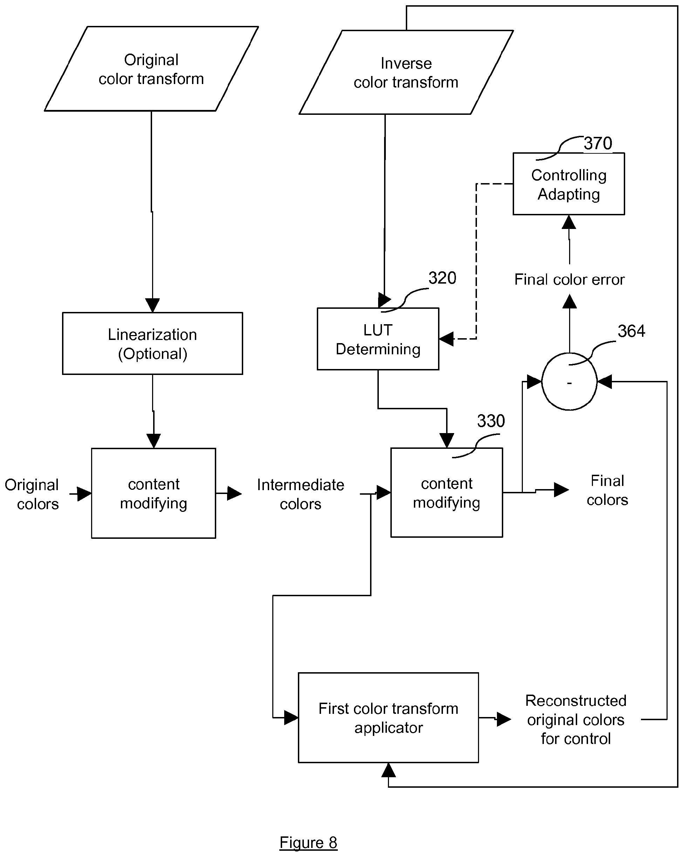

Figure 8 illustrates another embodiment of the method of the present disclosure, where the method can comprise controlling the adapting, the controlling being performed (at the opposite of the embodiment of figure 6) without having access to the original colors. Such an embodiment can be adapted for instance when the method is only implemented at a single stage, for instance at the second stage of the overall workflow described above. For instance, the method can be implemented for modifying the format of a content received from a transmitting device, with intermediate colors, the intermediate colors of the received content resulting from a previous use of a LUT (and interpolation) based on an original color transform during a "first stage". Depending upon embodiments, the method of the present disclosure can also have been used, or not, during this first stage, as illustrated by the left side of figure 8. For instance, in some embodiments where the method is applied only at the second stage of the workflow, the original color transform can have previously be applied (during a first stage of the workflow) directly to the original colors in order to generate the intermediate colors without using a LUT at all.

In the illustrated embodiment, the method can comprise monitoring 364 a gap (called "final gap" or "final error" in Figure 8) at the receiver side as shown in **Error! Reference source not found.** at the right side. The final color error can then be used as input for controlling 370 the adapting performed at the receiver (or in other words the "second stage" adapting) as already described before.

The monitored gap can for instance be calculated based on a difference between the final colors output by the method and reconstructed original colors. The reconstructed original colors can be calculated from the intermediate colors of the received content by using the inverse color transform. In case of absence of linearization at the transmitter side and up to the precision of the inverse color transform, the reconstructed original colors can be identical (or almost identical) to the original colors. However, direct application of the inverse color transform (instead of a LUT) requires in many practical cases more computational load than the application of the adapted second LUT. Therefore, the computation of the reconstructed original colors, the computation of the final error and the linearization control can be active only, or mostly, in limited time periods, for instance during a training or initialization phase . Example of such limited time periods can include a period after switching on the receiver, or a limited period after having changed the content channel delivering the intermediate colors, or any other period where the adapting needs to be varied (in view of being optimized for instance).

The present disclosure has been described with regard to protocols and/or standards. Of course, as a person skilled in the art will understand, the present disclosure can also be applied to a distribution or communication system using other communication protocols, for example communication standard, or to other standard than WIFI standards, or other formats, adapted to an audio and/or video content than the ones cited in the present disclosure.

As can be appreciated by one skilled in the art, aspects of the present principles can be embodied as a system, device, method, signal or computer readable product or medium.

For example, the present disclosure relates to a method, implemented in an electronic device for example, the method comprising:

- Obtaining input elements;
- Mapping the input elements to output elements according to a Look-Up Table (LUT) based on a mathematical transform;
- modifying the mathematical transform and/or the Look Up Table before the mapping.

According to at least one embodiment of the present disclosure, the input elements are input elements of an input content.

According to at least one embodiment of the present disclosure, the mathematic transform is a color transform, the input content is a visual content, the input elements are input colors of the visual content and the output elements are output colors of the visual content.

According to at least one embodiment of the present disclosure, the modifying of the mathematical transform, respectively the Look Up Table, comprises linearizing the mathematical transform, respectively the Look Up Table.

According to at least one embodiment of the present disclosure, the mathematical transform is the inverse of an original mathematical transform already used for obtaining the input element from original elements.

According to at least one embodiment of the present disclosure, the modifying takes into account a difference between the input elements and elements obtained by applying to the original elements a LUT resulting from a sampling of the original mathematical transform.

According to at least one embodiment of the present disclosure, the modifying takes into account a difference between the output elements and the original elements.

According to at least one embodiment of the present disclosure, the modifying takes into account the mathematical transform that results from a linearization of the original mathematical transform.

According to at least one embodiment of the present disclosure, the method comprises:

- Obtaining an output content by modifying the input content according to the output elements;
- Output the output content.

According to at least one embodiment of the present disclosure, the method comprises associating to the output content an identifier of the mathematical transform. According to another aspect, the present disclosure relates to an electronic device comprising at least one processing circuit or processor, the at least one processing circuit or processor being adapted for:

- Obtaining input elements;
- Mapping the input elements to output elements according to a Look-Up Table (LUT) based on a mathematical transform;
- modifying the mathematical transform and/or the Look Up Table before the mapping.

While not explicitly described, the above electronic device of the present disclosure can be adapted to perform the above method of the present disclosure in any of its embodiments.
According to another aspect, the present disclosure relates to a communication system comprising at least one first electronic device comprising at least one processor adapted for:

- Obtaining input elements;
- Mapping the input elements to intermediate elements according to a Look-Up Table (LUT) based on a mathematical transform;
- modifying the mathematical transform and/or the Look Up Table before mapping the input elements;

at least one second electronic device comprising at least one processor adapted for:

- Obtaining the intermediate elements;
- Mapping the intermediate elements to output elements according to a Look-Up Table (LUT) based on an inverse of the mathematical transform;
- modifying the inverse of the mathematical transform and/or the Look Up Table before mapping the intermediate elements.

According to at least one embodiment of the present disclosure, the input elements and the output elements are High Dynamic Range (HDR) colors and the intermediate elements are Standard Dynamic Range (HDR) colors.
While not explicitly described, the present embodiments related to the methods or to the corresponding electronic devices or communication system can be employed in any combination or sub-combination.
According to another aspect, the present disclosure relates to a non-transitory computer readable program product comprising program code instructions for performing, when the non-transitory software program is executed by a computer, at least one of the methods of the present disclosure, in any of its embodiments.
For example, at least one embodiment of the present disclosure relates to a non-transitory computer readable program product comprising program code instructions for performing, when the non-transitory software program is executed by a computer, a method, implemented in an electronic device, the method comprising:

- Obtaining input elements;
- Mapping the input elements to output elements according to a Look-Up Table (LUT) based on a mathematical transform;
- modifying the mathematical transform and/or the Look Up Table before the mapping.

According to another aspect, the present disclosure relates to a computer readable storage medium carrying a software program comprising program code instructions for performing, when the non-transitory software program is executed by a computer, the method of the present disclosure, in any of its embodiments.
According to an embodiment of the present disclosure, the computer readable storage medium tangibly embodies a program of instructions executable by a computer for performing, when the non-transitory software program is executed by a computer, a method, implemented in an electronic device, the method comprising:

- Obtaining input elements;
- Mapping the input elements to output elements according to a Look-Up Table (LUT) based on a mathematical transform;
- modifying the mathematical transform and/or the Look Up Table before the mapping.

As can be appreciated by one skilled in the art, aspects of the present principles can be embodied as a system, method, or computer readable medium. Accordingly, aspects of the present disclosure can take the form of a hardware embodiment, a software embodiment (including firmware, resident software, micro-code, and so forth), or an embodiment combining software and hardware aspects that can all generally be referred to herein as a "circuit", "module" or "system". Furthermore, aspects of the present principles can take the form of a computer readable storage medium. Any combination of one or more computer readable storage medium may be utilized.

A computer readable storage medium can take the form of a computer readable program product embodied in one or more computer readable medium and having computer readable program code embodied thereon that is executable by a computer. A computer readable storage medium as used herein can be considered to be a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage media to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it can be appreciated by those skilled in the art that the block diagrams presented herein represent conceptual views of illustrative system components and/or circuitry of some embodiments of the present principles. Similarly, it can be appreciated that any flow charts, flow diagrams, state transition diagrams, pseudo code, and the like represent various processes which may be substantially represented in computer readable storage media and so executed by a computer or processor, whether such computer or processor is explicitly shown.

It is also to be pointed out that the at least some of embodiments can be combined together, even if not explicitly disclosed above.

**Claims**

1. An electronic device comprising at least one processor, said at least one processor being adapted for:

   - Obtaining input elements;
   - Mapping said input elements to output elements according to a Look-Up Table (LUT) based on a mathematical transform;
   - modifying said mathematical transform and/or said Look Up Table before said mapping.

2. A method, implemented in an electronic device, the method comprising:

   - Obtaining input elements;
   - Mapping said input elements to output elements according to a Look-Up Table (LUT) based on a mathematical transform;
   - modifying said mathematical transform and/or said Look Up Table before said mapping.

3. The electronic device of claim 1 or the method of claim 2 wherein said input elements are input elements of an input content.

4. The electronic device or the method of claim 3 wherein said mathematic transform is a color transform, said input content is a visual content, said input elements are input colors of said visual content and said output elements are output colors of said visual content.

5. The electronic device of any of claims 1 or 3 or 4 or the method of claims 2 to 4 wherein said modifying of said mathematical transform, respectively said Look Up Table, comprises linearizing said mathematical transform, respectively said Look Up Table.

6. The electronic device of any of claims 1, or 3 to 5 or the method of any of claims 2 to 5 wherein said mathematical transform is the inverse of an original mathematical transform already used for obtaining said input element from original elements.

7. The electronic device or the method of claim 6 wherein said modifying takes into account a difference between said input elements and elements obtained by applying to said original elements a LUT resulting from a sampling of said original mathematical transform.

8. The electronic device or the method of claim 6 or 7, wherein said modifying takes into account a difference between said output elements and said original elements.

9. The electronic device or the method of any of claims 6 to 8 wherein said modifying takes into account the mathematical transform that results from a linearization of the original mathematical transform.

10. The electronic device of any of claims 3 to 9, said at least one processor being adapted for, or the method of any of claims 3 to 9 wherein said method comprises:

    - Obtaining an output content by modifying said input content according to said output elements;
    - Output said output content.

11. The electronic device of claim 10, said at least one processor being adapted for, or the method of 10 comprising associating to said output content an identifier of said mathematical transform.

12. System comprising:

    at least one first electronic device comprising at least one processor adapted for

    - Obtaining input elements;
    - Mapping said input elements to intermediate elements according to a Look-Up Table (LUT) based on a mathematical transform;
    - modifying said mathematical transform and/or said Look Up Table before mapping said input elements;

    at least one second electronic device comprising at least one processor adapted for:

    - Obtaining said intermediate elements;
    - Mapping said intermediate elements to output elements according to a Look-Up Table (LUT) based on an inverse of said mathematical transform;
    - modifying said inverse of said mathematical transform and/or said Look Up Table before mapping said intermediate elements.

13. The system of claim 12 wherein said input elements and said output elements are High Dynamic Range (HDR) colors and said intermediate elements are Standard Dynamic Range (HDR) colors.

14. Non-transitory computer readable program product comprising program code instructions for performing, when the non-transitory readable program product is executed by a computer, at least one method according to any of claims 2 to 11.

15. Non- transitory computer readable storage medium carrying a software program comprising program code instructions executable by a computer for performing, when the software program is executed by a computer, at least one method according to any of claims 2 to 11.

Figure 1

Figure 2

Figure 9

300

302 Obtaining content

310 Obtaining input content element

320 LUT determining

322 Obtaining transform

324 Obtaining adapted LUT

330 Modifying content elements

332 Applying LUT on first content elements

334 Interpolating

Output content elements

340 Updating content

350 Outputting content

Figure 3

Original
color transform

324

Adapting — 3242

Sampling — 3244

First LUT

330

Modifying content
(Applying First
LUT and
interpolating)

Original
colors

Intermediate
colors

Inverse
color transform

324

Adaptation — 3242

Sampling — 3244

Second LUT

330

Modifying content
(Applying
Second LUT
and interpolating)

Final
colors

Figure4A

Figure 4B

Original
color transform

324

Sampling

3246

First LUT

Adapting

3248

Modified First
LUT

230

Modifying content
(Applying
Modiied First
LUT and
interpolating)

Original
colors

Intermediate
colors

Inverse
color transform

324

Sampling

3246

Second LUT

Adapting

3248

Modified Second
LUT

230

Modifying content
(Applying
Modified Second
LUT
and interpolating)

Final
colors

Figure 5A

Figure 5B

Figure 6

Figure 7

Figure 8

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/332296 A1 (KADU HARSHAD [US] ET AL) 15 November 2018 (2018-11-15) * abstract * * figures 1-4 * * paragraph [0019] - paragraph [0064] * | 1-15 | INV. H04N1/60 H04N9/64 G06T5/00 H04N5/00 |
| X<br>A | WO 2018/151719 A1 (HEWLETT PACKARD DEVELOPMENT CO [US]) 23 August 2018 (2018-08-23) * abstract * * figures 1-9 * * paragraphs [0023], [0028] - [0031], [0035] - [0037], [0041] - [0042], [0048] - [0052], [0055], [0059] * | 1-11,14, 15<br>12,13 | |
| X<br>A | US 2017/046836 A1 (BRAMWELL DAVID IAN [GB] ET AL) 16 February 2017 (2017-02-16) * abstract * * paragraphs [0018] - [0024], [0090] - [0102] * * figures 1-11 * | 1-4,10, 11,14,15<br>5-9,12, 13 | |

TECHNICAL FIELDS
SEARCHED      (IPC)

H04N
G06T

The present search report has been drawn up for all claims

| Place of search | Date of completion of the search | Examiner |
|---|---|---|
| The Hague | 3 September 2019 | Visser, Michelle L. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 30 5405

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2019

| Patent document cited in search report | | Publication date | Patent family member(s) | | Publication date |
|---|---|---|---|---|---|
| US 2018332296 | A1 | 15-11-2018 | CN | 108370446 A | 03-08-2018 |
| | | | EP | 3387833 A1 | 17-10-2018 |
| | | | JP | 6470474 B2 | 13-02-2019 |
| | | | JP | 2019503126 A | 31-01-2019 |
| | | | KR | 20180075671 A | 04-07-2018 |
| | | | US | 2018332296 A1 | 15-11-2018 |
| | | | WO | 2017100359 A1 | 15-06-2017 |
| WO 2018151719 | A1 | 23-08-2018 | NONE | | |
| US 2017046836 | A1 | 16-02-2017 | EP | 3134865 A1 | 01-03-2017 |
| | | | GB | 2525588 A | 04-11-2015 |
| | | | US | 2017046836 A1 | 16-02-2017 |
| | | | WO | 2015162409 A1 | 29-10-2015 |

EPO FORM P0459

For more details about this annex : see Official Journal of the European Patent Office, No. 12/82